# FASCICULE DE BREVET EUROPEEN

(11) **EP 3 082 241 B1**
(45) Date de publication et mention de la délivrance du brevet: **29.07.2020**
(21) Numéro de dépôt: 16164789.6
(22) Date de dépôt: 12.04.2016
(51) Int. Cl.: H02M 1/15, H02M 1/42

(54) **CHARGEUR DE BATTERIE, INSTALLATION ÉLECTRIQUE ET VÉHICULE AUTOMOBILE**
BATTERIELADEGERÄT, ELEKTRISCHE ANLAGE UND KRAFTFAHRZEUG
BATTERY CHARGER, ELECTRICAL INSTALLATION AND MOTOR VEHICLE

(30) Priorité: 15.04.2015 FR 1553312
(43) Date de publication de la demande: 19.10.2016
(73) Titulaire: Valeo Siemens eAutomotive France SAS, 95800 Cergy (FR)
(72) Inventeur: DE SOUSA, Luis, Woking, GU22 7PZ (GB); CONDAMIN, Bruno, 95300 Pontoise (FR); BOUCHEZ, Boris, 95800 Cergy (FR); CHAUVENET, Pierre-Alexandre, 95800 Cergy (FR); SILVESTRE, Bénédicte, 78740 Vaux sur Seine (FR)
(74) Mandataire: Argyma

(56) Documents cités:
- CN-A- 101 685 969
- FR-A1- 2 991 833

## Description

### DOMAINE TECHNIQUE

La présente invention concerne un chargeur de batterie, en particulier combiné avec un onduleur dans une installation électrique.

L'invention s'applique en particulier au domaine des véhicules automobiles électriques.

Dans la description et les revendications qui vont suivre, le terme de « connexion » (et ses dérivés, tel que le verbe « connecter ») de composants électriques englobe le cas d'une connexion « directe » par un conducteur électrique, ainsi que le cas d'une connexion « indirecte », c'est-à-dire au travers d'un ou plusieurs autres composants électriques.

### ARRIÈRE-PLAN TECHNOLOGIQUE

La demande de brevet publiée avec le numéro FR 2 991 833 A1 décrit un chargeur de batterie du type comportant :
- deux bornes de sortie entre lesquelles une batterie est destinée à être connectée pour recevoir un courant de charge,
- deux bornes d'entrée destinées à être connectées à un réseau électrique pour se voir appliquer une tension de réseau sinusoïdale,
- deux inductances présentant des premières extrémités connectées respectivement à la première borne d'entré et à la deuxième borne d'entrée,
- deux bras de commutation destinés à connecter respectivement des deuxièmes extrémités des inductances sélectivement à la première borne de sortie et à la deuxième borne de sortie,
- un dispositif de commande destiné à commander les bras de commutation de manière à prélever du réseau électrique un courant de réseau en phase avec la tension de réseau.

Un tel chargeur de batterie comporte donc un correcteur du facteur de puissance (*«power factor corrector»* ou PFC en anglais). Le rôle d'un correcteur du facteur de puissance est d'absorber un courant en phase avec la tension du réseau électrique pour minimiser la puissance réactive et maximiser la puissance active. Cependant, la puissance fournie à la batterie n'est pas purement continue mais comprend une composante sinusoïdale. Or, pour assurer un rechargement correct de la batterie et éviter une usure prématurée de cette dernière, cette composante sinusoïdale doit de préférence être supprimée. Pour cela, le chargeur de batterie de la publication précédente comporte une capacité de lissage destinée à lisser le courant de charge fourni à la batterie, et donc la puissance fournie à la batterie. Cette capacité de lissage est montée entre la deuxième borne de sortie, correspondant à la borne négative de la batterie, et une troisième inductance connectée aux bornes de sortie par un troisième bras de commutation. Ce troisième bras de commutation est destiné à permettre, par ses commutations, la charge et la décharge de la capacité de lissage qui, en recevant du courant, réduit le courant fourni à la batterie et, en restituant du courant, augmente le courant fourni à la batterie.

L'invention a pour but de proposer un chargeur de batterie permettant de réduire les pertes.

### RÉSUMÉ DE L'INVENTION

À cet effet, il est proposé un chargeur de batterie du type précité, caractérisé en ce qu'il comporte en outre :
- une capacité de lissage présentant une première extrémité connectée à la deuxième borne de sortie,
- un dispositif de connexion destiné à connecter une deuxième extrémité de la capacité de lissage à la deuxième borne d'entrée,
et en ce que, lorsque la deuxième extrémité de la capacité de lissage est connectée à la deuxième borne d'entrée, le dispositif de commande est en outre destiné à commander au moins le deuxième bras de commutation de manière à alternativement charger et décharger la capacité de lissage pour lisser le courant de charge.

Grâce à l'invention, le nombre de bras de commutation et d'inductances utilisés pour corriger le facteur de puissance et pour lisser le courant de charge peut être réduit à deux seulement. Ainsi, les pertes par commutation sont réduites, et l'absence de la troisième inductance permet de réduire les pertes fers.

De façon optionnelle, le chargeur de batterie comporte en outre :
- un dispositif de mesure de la tension de batterie,
le dispositif de connexion est destiné à prendre au moins deux états, la deuxième extrémité de la capacité de lissage étant connectée à la deuxième borne d'entrée dans l'un des deux états mais pas dans l'autre, et le dispositif de commande est destiné à commander le dispositif de connexion en fonction de la tension de batterie mesurée pour faire passer le dispositif de connexion d'un état à l'autre.

Ainsi, le chargeur de batterie peut, en fonction de la tension de batterie, sélectionner ou non le deuxième bras de commutation pour lisser le courant de charge.

De façon optionnelle également, le chargeur de batterie comporte en outre :
- une troisième inductance,
- un troisième bras de commutation destiné à connecter une première extrémité de la troisième inductance sélectivement à la première borne de sortie et à la deuxième borne de sortie,
le dispositif de connexion comprend un commutateur destiné à connecter la deuxième extrémité de la capacité de lissage sélectivement à la deuxième borne d'entrée et à une deuxième extrémité de la troisième inductance,
et, lorsque la deuxième extrémité de la capacité de lissage est connectée à la deuxième extrémité de la troisième inductance, le dispositif de commande est destiné à commander le troisième bras de commutation de manière à alternativement charger et décharger la capacité de lissage pour lisser le courant de charge.

Ainsi, il est possible de choisir d'utiliser soit le deuxième bras de commutation, soit le troisième bras de commutation, pour lisser le courant de charge.

De façon optionnelle également, le dispositif de commande est destiné à commander le commutateur pour connecter la deuxième extrémité de la capacité de lissage à la deuxième borne d'entrée lorsque la tension de batterie est supérieure à un seuil, et à commander le commutateur pour connecter la deuxième extrémité de la capacité de lissage à la deuxième extrémité de la troisième inductance lorsque la tension de batterie est inférieure au seuil.

En effet, lorsque la tension de batterie est trop faible par rapport à la tension de réseau, il peut ne pas être possible d'utiliser le deuxième bras de commutation pour à la fois corriger le facteur de puissance et lisser le courant de charge. Grâce l'invention, le chargeur de batterie peut détecter la baisse de la tension de batterie pour utiliser le troisième bras de commutation pour le lissage du courant de charge.

Il est également proposé une installation électrique comportant :
- un chargeur de batterie selon l'invention,
- une batterie connectées aux bornes de sortie du chargeur de batterie,
- un moteur électrique comportant trois enroulements,
- un onduleur connectant la batterie au moteur électrique, l'onduleur comportant six bras de commutation destinés à connecter respectivement les extrémités des enroulements sélectivement à la première borne de sortie et à la deuxième borne de sortie.

De façon optionnelle, le premier bras de commutation et le deuxième bras de commutation du chargeur de batterie sont des bras de commutation de l'onduleur.

De façon optionnelle également, la première inductance et la deuxième inductance du chargeur de batterie comportent chacune au moins une partie de respectivement le premier enroulement et le deuxième enroulement du moteur électrique.

De façon optionnelle également, le troisième bras de commutation du chargeur de batterie est un bras de commutation de l'onduleur.

De façon optionnelle également, la troisième inductance du chargeur de batterie comporte au moins une partie du troisième enroulement du moteur électrique.

Ainsi, avec les quatre variantes optionnelles précédentes, une économie de composants est réalisée, ce qui peut permettre une économie en coût et en volume de l'installation électrique.

Il est également proposé un véhicule automobile comportant une installation électrique selon l'invention, le moteur électrique étant destiné à entraîner des roues du véhicule automobile.

### DESCRIPTION DES FIGURES

La figure 1 est un schéma électrique d'une installation électrique mettant en œuvre l'invention.
La figure 2 est un schéma électrique d'un chargeur de batterie de l'installation électrique de la figure 1, dans un premier mode de fonctionnement.
La figure 3 est un schéma électrique d'un chargeur de batterie de l'installation électrique de la figure 1, dans un deuxième mode de fonctionnement.

### DESCRIPTION DÉTAILLÉE

Sur les figures, les extrémités de chacun des composants électriques (inductances et capacité) discutés ci-dessous sont repérées respectivement par la marque « 1 » indiquant une première extrémité du composant électrique et la marque « 2 » indiquant une deuxième extrémité du composant électrique.

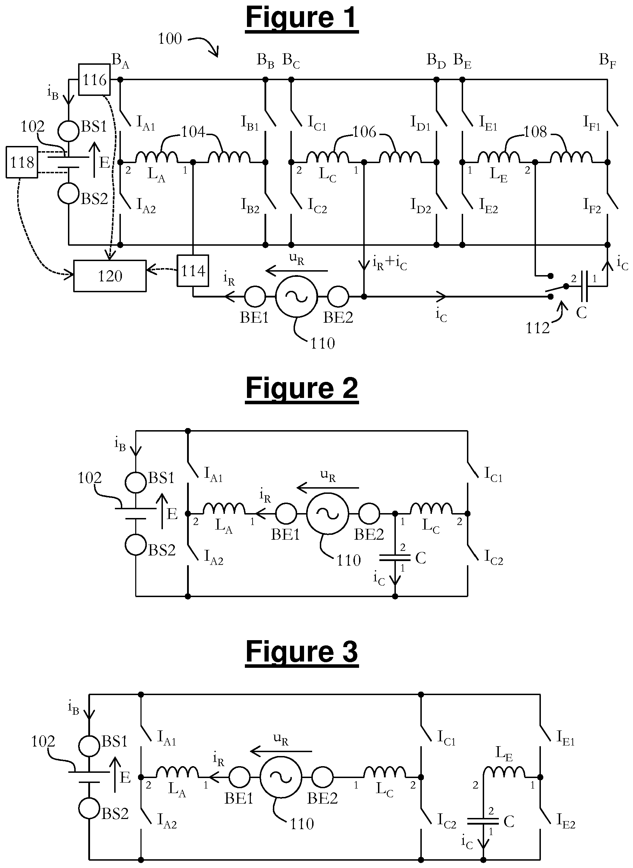

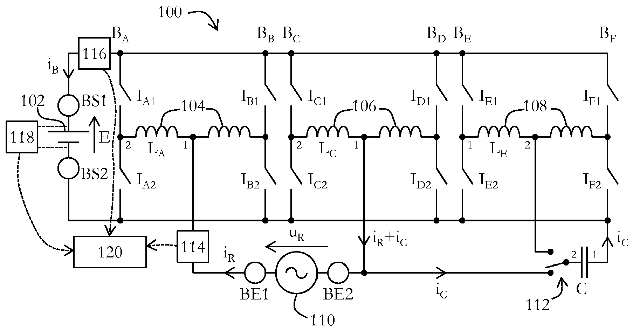

En référence à la figure 1, une installation électrique 100 mettant en œuvre l'invention va à présent être décrite.

Cette installation électrique 100 est par exemple destinée à être installée dans un véhicule automobile.

L'installation électrique 100 comporte tout d'abord une batterie 102 présentant une borne négative et une borne positive et fournissant, entre ces bornes, une tension E continue.

L'installation électrique 100 comporte en outre un moteur électrique présentant trois enroulements 104, 106, 108.

L'installation électrique 100 comporte en outre un onduleur connectant la batterie 102 au moteur électrique.

Plus précisément, l'onduleur comporte deux bornes BS1, BS2 connectées respectivement à la borne positive et à la borne négative de la batterie 102.

L'onduleur comporte en outre six bras de commutation B_{A}...B_{F} destinés à connecter respectivement les extrémités des enroulements 104, 106, 108 sélectivement à la borne BS1 et à la borne BS2. Par exemple, le bras de commutation B_{A} est destiné à connecter une extrémité de l'enroulement 104 à la borne BS1 ou à la borne BS2, suivant son état.

Chaque bras de commutation B_{A}...B_{F} comporte deux interrupteurs I_{A1} et I_{A2}, ..., I_{F1} et I_{F2} connectés l'un à l'autre en un point milieu auquel est connectée l'extrémité de l'enroulement 104, 106, 108 associé à ce bras de commutation B_{A}...B_{F}. Les interrupteurs I_{A1} et I_{A2}, ..., I_{F1} et I_{F2} d'un même bras de commutation B_{A}...B_{F} sont en outre connectés respectivement à la borne BS1 et à la borne BS2. Par exemple, les interrupteurs I_{A1} et I_{A2} du bras de commutation B_{A} sont connectés respectivement à la borne BS1 et à la borne BS2.

Ainsi, suivant la configuration des bras de commutation B_{A}...B_{F}, chaque enroulement 104, 106, 108 peut se voir appliquer une tension nulle (les deux extrémités de l'enroulement sont connectées à la même borne, négative ou positive, de la batterie 102), la tension +E ou la tension -E. Il est ainsi possible de faire varier les tensions moyennes appliquées aux enroulements pour faire tourner un rotor du moteur électrique. Le moteur électrique est par exemple destiné à entraîner des roues du véhicule automobile.

L'installation électrique 100 comporte en outre un chargeur de batterie destiné à charger la batterie 104 à partir d'un réseau électrique 110, en fournissant un courant de charge i_{B} à la batterie 102. Le réseau électrique 110 est par exemple un réseau monophasé ou bien un réseau polyphasé, par exemple triphasé. Dans ce deuxième cas, la borne BS2 est par exemple connectée au neutre du réseau électrique 110, tandis que la borne BS1 est connectée à l'une des phases du réseau électrique 110.

Comme cela sera apparent par la suite, dans l'exemple décrit, le chargeur de batterie réutilise des éléments de l'onduleur et du moteur électrique.

Ainsi, le chargeur de batterie comporte tout d'abord les bornes BS1, BS2, qualifiées de « bornes de sortie » dans le cadre du chargeur de batterie. Comme indiqué plus haut, les bornes de sortie BS1, BS2 sont connectées respectivement à la borne positive et à la borne négative de la batterie 102 pour fournir le courant de charge i_{B} à la batterie 102.

Le chargeur de batterie 106 comporte en outre deux bornes d'entrée BE1, BE2 destinées à être connectées au réseau électrique 110 pour se voir appliquer une tension de réseau u_{R} sinusoïdale. La connexion se fait par exemple au moyen d'une connectique (non représentée) permettant le raccordement à une prise du réseau électrique 110.

Le chargeur de batterie 106 comporte en outre deux inductances L_{A}, L_{C} présentant des premières extrémités connectées respectivement à la borne d'entrée BE1 et à la borne d'entrée BE2. Dans l'exemple décrit, les inductances L_{A}, L_{C} comportent chacune au moins une partie de respectivement l'enroulement 104 et l'enroulement 106.

Le chargeur de batterie 106 comporte en outre les deux bras de commutation B_{A}, B_{C} destinés à connecter respectivement des deuxièmes extrémités des inductances L_{A}, L_{C} sélectivement à la borne de sortie BS1 et à la borne de sortie BS2. Ainsi, le bras de commutation B_{A} est destiné à connecter la borne d'entrée BE1 sélectivement à la borne de sortie BS1 et à la borne de sortie BS2, à chaque fois au travers de l'inductance L_{A}. De manière similaire, le bras de commutation B_{C} est destiné à connecter la borne d'entrée BE2 sélectivement à la borne de sortie BS1 et à la borne de sortie BS2, à chaque fois au travers de l'inductance L_{C}.

Le chargeur de batterie comporte en outre une inductance L_{E} comportant au moins une partie de l'enroulement 108.

Le chargeur de batterie comporte en outre le bras de commutation B_{E} destiné à connecter une première extrémité de l'inductance L_{E} sélectivement à la borne de sortie BS1 et à la borne de sortie BS2.

Le chargeur de batterie comporte en outre une capacité de lissage C présentant une première extrémité connectée à la borne de sortie BS2.

Le chargeur de batterie comporte en outre un dispositif de connexion 112 destiné à connecter une deuxième extrémité de la capacité de lissage C au moins à la borne d'entrée BE2. Dans l'exemple décrit, le dispositif de connexion 112 est un commutateur 112 destiné à connecter la deuxième extrémité de la capacité de lissage C sélectivement à la borne d'entrée BE2 et à une deuxième extrémité de l'inductance L_{E}.

Lorsque le commutateur connecte la deuxième extrémité de la capacité de lissage C à la borne d'entrée BE2, le bras de commutation B_{C} est destiné à de connecter la capacité de lissage C sélectivement à la borne de sortie BS1 et à la borne de sortie BS2, à chaque fois au travers de l'inductance L_{C}. Lorsque le commutateur 112 connecte la deuxième extrémité de la capacité de lissage C à la deuxième extrémité de l'inductance L_{E}, le bras de commutation B_{E} est destiné à de connecter la capacité de lissage C sélectivement à la borne de sortie BS1 et à la borne de sortie BS2, à chaque fois au travers de l'inductance L_{E}.

Le chargeur de batterie comporte en outre un dispositif 114 de mesure du courant de réseau i_{R}, un dispositif 116 de mesure du courant de charge i_{B} et un dispositif 118 de mesure de la tension de batterie E.

Le chargeur de batterie 106 comporte en outre un dispositif de commande 120 destiné à commander les bras de commutation B_{A}, B_{C}, B_{E} et le commutateur 112, à partir des mesures des dispositifs de mesure 114, 116, 118.

Plus précisément, le chargeur de batterie est destiné à fonctionner alternativement dans deux modes de fonctionnement.

Lorsque la tension de batterie E mesurée est supérieure à un seuil, le dispositif de commande 120 fait passer le chargeur de batterie dans un premier mode de fonctionnement. Le schéma électrique du chargeur de batterie dans le premier mode de fonctionnement est illustré sur la figure 2.

Dans le premier mode de fonctionnement, le dispositif de commande 120 commande au commutateur 112 de connecter la deuxième extrémité de la capacité de lissage C à la borne d'entrée BE2.

Le dispositif de commande 120 commande en outre les bras de commutation B_{A}, B_{C} en fonction du courant de réseau i_{R} mesuré, de manière à prélever du réseau électrique 110 un courant de réseau i_{R} en phase avec la tension de réseau u_{R}. Ainsi, le facteur de puissance du chargeur de batterie est augmenté pour qu'il s'approche de 1.

Le dispositif de commande 120 commande en outre au moins le bras de commutation B_{C} (et de préférence les deux bras de commutation B_{A}, B_{C}) en fonction du courant de charge i_{B} mesuré, de manière à alternativement charger et décharger la capacité de lissage C pour lisser le courant de charge i_{B}. La capacité de lissage C est traversée par un courant de lissage i_{C} qui, lors de la charge de la capacité de lissage C, vient réduire le courant de charge i_{B}, et lors de la décharge de la capacité de lissage C, vient augmenter le courant de charge i_{B}.

Il sera apprécié que le bras de commutation B_{E} n'est pas utilisé dans le premier mode de fonctionnement. Seuls les deux bras de commutation B_{A}, B_{C} sont utilisés pour corriger le facteur de puissance et pour lisser le courant de charge i_{B}. Cela limite le nombre d'interrupteurs, et donc les pertes dues aux commutations, ainsi que le nombre d'inductances, et donc les pertes fers.

Le lissage du courant de charge i_{B} permet de réduire les oscillations apparaissant à deux fois la fréquence du réseau électrique 110. Par exemple, avec une fréquence du réseau électrique 110 valant 50 ou 60 Hz, les oscillations de courant de charge i_{B} auraient une fréquence de 100 ou 120 Hz, respectivement.

Lorsque la tension de batterie E mesurée est inférieure au seuil, le dispositif de commande 120 fait passer le chargeur de batterie dans un deuxième mode de fonctionnement. Le schéma électrique du chargeur de batterie dans le deuxième mode de fonctionnement est illustré sur la figure 3.

Dans le deuxième mode de fonctionnement, le dispositif de commande 120 commande au commutateur 112 de connecter la deuxième extrémité de la capacité de lissage C à la deuxième extrémité de l'inductance L_{E}.

Le dispositif de commande 120 commande toujours les bras de commutation B_{A}, B_{C} en fonction du courant de réseau i_{R} mesuré, de manière à prélever du réseau électrique 110 un courant de réseau i_{R} en phase avec la tension de réseau u_{R}.

Cependant, cette fois, c'est le bras de commutation B_{E} que le dispositif de commande 120 commande en fonction du courant de charge i_{B} mesuré, de manière à alternativement charger et décharger la capacité de lissage C pour lisser le courant de charge i_{B}.

De préférence, le seuil est supérieur ou égal à deux fois la tension crête (c'est-à-dire la valeur maximale) du réseau électrique 110. Le seuil est par exemple égal à deux fois la tension crête théorique plus 10%. En effet, lorsque le chargeur de batterie est dans le premier mode de fonctionnement (figure 2), il est nécessaire pour son bon fonctionnement que la tension à la borne BE1 soit toujours inférieure à la tension de batterie E (tension à la borne BS1). Lorsque les interrupteurs I_{A1} et I_{C2} sont fermés tandis que les interrupteurs I_{A2} et I_{C1} sont ouverts, la tension de réseau u_{R}, et la tension de la capacité de lissage C s'additionnent. Ainsi, pour tenir compte du cas le plus défavorable, il est nécessaire que la tension E soit supérieure à somme de la tension crête du réseau électrique 110 et de la tension crête de la capacité de lissage C. Or, la tension crête de la capacité de lissage C est égale à la tension crête du réseau électrique 110. Ainsi, pour que le chargeur de batterie puisse fonctionner dans le premier mode de fonctionnement, il est nécessaire que la tension de batterie E soit supérieure à deux fois la tension crête du réseau électrique 110. Par exemple, en Europe, la tension efficace est de 240 V avec des dépassements possibles jusqu'à 10%. Ainsi, la tension crête théorique de la tension de réseau u_{R} est égale à (√2 x 240) = 339 V. En tenant compte des dépassement possible, la tension de crête du réseau électrique 110 est de 339 x 110% = 373 V. Pour que le chargeur de batterie puisse fonctionner efficacement dans le premier mode de fonctionnement, il est donc nécessaire que la tension de batterie E soit supérieure au seuil de 373 x 2 = 746 V. Si la tension de batterie E passe en dessous de ce seuil, par exemple parce qu'elle est beaucoup déchargée, il est préférable de passer dans le deuxième mode de fonctionnement où la tension de la capacité de lissage C n'est jamais additionnée à la tension de réseau i_{R}.

Le seuil permettant de basculer d'un mode de fonctionnement à l'autre est par exemple un seuil fixe prédéterminé.

Alternativement, le seuil dépend de la tension du réseau. Dans ce cas, par exemple, l'installation électrique 100 comporte en outre un dispositif de mesure de l'amplitude de la tension de réseau u_{R}, par exemple la tension de réseau crête-à-crête. Le dispositif de commande 120 est alors destiné à déterminer le seuil à partir de la mesure. En particulier, le dispositif de commande 120 est destiné à déterminer un seuil d'autant plus élevé que l'amplitude de la tension de réseau est élevée.

La présente invention n'est pas limitée au mode de réalisation décrit précédemment, mais est au contraire définie par les revendications qui suivent. Il sera en effet apparent à l'homme du métier que des modifications peuvent y être apportées.

En particulier, le chargeur de batterie pourrait être conçu pour fonctionner uniquement dans le premier mode de fonctionnement, par exemple s'il est jugé que le risque de décharge de la batterie E est très faible. Dans ce cas, le dispositif de connexion 112 pourrait être un simple connecteur électrique connectant la capacité de lissage C à la borne d'entrée BE2. Dans ce cas toujours, le bras de commutation B_{E} ne serait pas utilisé.

Par ailleurs, les termes utilisés dans les revendications ne doivent pas être compris comme limités aux éléments du mode de réalisation décrit précédemment, mais doivent au contraire être compris comme couvrant tous les éléments équivalents que l'homme du métier peut déduire à partir de ses connaissances générales.

**RÉFÉRENCES**

| | |
|---|---|
| Installation électrique | 100 |
| Batterie | 102 |
| Premier enroulement | 104 |
| Deuxième enroulement | 106 |
| Troisième enroulement | 108 |
| Réseau électrique | 110 |
| Dispositif de connexion (commutateur) | 112 |
| Dispositif de mesure du courant de réseau | 114 |
| Dispositif de mesure du courant de charge | 116 |
| Dispositif de mesure de la tension de batterie | 118 |
| Dispositif de commande | 120 |
| | |
| Capacité de lissage | C |
| Courant de lissage | i_{C} |
| Tension de réseau | u_{R} |
| Courant de réseau | i_{R} |
| Tension de batterie | E |
| Courant de charge | i_{B} |
| Bras de commutation | B_{A}...B_{F} |
| Interrupteurs | I_{A1}, I_{A2}, ..., I_{F1}, I_{F2} |

## Revendications

1. Chargeur de batterie, comportant :
- deux bornes de sortie (BS1, BS2) entre lesquelles une batterie (102) est destinée à être connectée pour recevoir un courant de charge (i_{B}),
- deux bornes d'entrée (BE1, BE2) destinées à être connectées à un réseau électrique (110) pour se voir appliquer une tension de réseau (u_{R}) sinusoïdale,
- deux inductances (L_{A}, L_{C}) présentant des premières extrémités connectées respectivement à la première borne d'entrée (BE1) et à la deuxième borne d'entrée (BE2),
- deux bras de commutation (B_{A}, B_{C}) destinés à connecter respectivement des deuxièmes extrémités des inductances (L_{A}, L_{C}) sélectivement à la première borne de sortie (BS1) et à la deuxième borne de sortie (BS2),
- un dispositif de commande (120) destiné à commander les bras de commutation (B_{A}, B_{C}) de manière à prélever du réseau électrique (110) un courant de réseau (i_{R}) en phase avec la tension de réseau (u_{R}),
**caractérisé en ce qu'**il comporte en outre :
- une capacité de lissage (C) présentant une première extrémité connectée à la deuxième borne de sortie (BS2),
- un dispositif de connexion (112) destiné à connecter une deuxième extrémité de la capacité de lissage (C) à la deuxième borne d'entrée (BE2),
et **en ce que**, lorsque la deuxième extrémité de la capacité de lissage (C) est connectée à la deuxième borne d'entrée (BE2), le dispositif de commande (120) est en outre destiné à commander au moins le deuxième bras de commutation (B_{C}) de manière à alternativement charger et décharger la capacité de lissage (C) pour lisser le courant de charge (i_{B}).

2. Chargeur de batterie selon la revendication 1, comportant en outre :
- un dispositif (118) de mesure de la tension de batterie (E),
dans lequel le dispositif de connexion (112) est destiné à prendre au moins deux états, la deuxième extrémité de la capacité de lissage (C) étant connectée à la deuxième borne d'entrée (BE2) dans l'un des deux états, mais pas dans l'autre, et dans lequel le dispositif de commande (120) est destiné à commander le dispositif de connexion (112) en fonction de la tension de batterie (E) mesurée pour faire passer le dispositif de connexion (112) d'un état à l'autre.

3. Chargeur de batterie selon la revendication 1 ou 2, comportant en outre :
- une troisième inductance (L_{E}),
- un troisième bras de commutation (B_{E}) destiné à connecter une première extrémité de la troisième inductance (L_{E}) sélectivement à la première borne de sortie (BS1) et à la deuxième borne de sortie (BS2),
dans lequel le dispositif de connexion (112) comprend un commutateur destiné à connecter la deuxième extrémité de la capacité de lissage (C) sélectivement à la deuxième borne d'entrée (BE2) et à une deuxième extrémité de la troisième inductance (L_{E}),
et dans lequel, lorsque la deuxième extrémité de la capacité de lissage (C) est connectée à la deuxième extrémité de la troisième inductance (L_{E}), le dispositif de commande (120) est destiné à commander le troisième bras de commutation (B_{E}) de manière à alternativement charger et décharger la capacité de lissage (C) pour lisser le courant de charge (i_{B}).

4. Chargeur de batterie selon la revendication 3, dans lequel le dispositif de commande (120) est destiné à commander le commutateur pour connecter la deuxième extrémité de la capacité de lissage (C) à la deuxième borne d'entrée (BE2) lorsque la tension de batterie (E) est supérieure à un seuil, et à commander le commutateur pour connecter la deuxième extrémité de la capacité de lissage (C) à la deuxième extrémité de la troisième inductance (L_{E}) lorsque la tension de batterie (E) est inférieure au seuil.

5. Installation électrique (100) comportant :
- un chargeur de batterie selon l'une quelconque des revendications 1 à 4,
- une batterie (102) connectée aux bornes de sortie (BS1, BS2) du chargeur de batterie,
- un moteur électrique comportant trois enroulements (104, 106, 108),
- un onduleur connectant la batterie (102) au moteur électrique, l'onduleur comportant six bras de commutation (B_{A}...B_{F}) destinés à connecter respectivement les six extrémités des enroulements (104, 106, 108) sélectivement à la première borne de sortie (BS1) et à la deuxième borne de sortie (BS2).

6. Installation électrique (100) selon la revendication 5, dans laquelle le premier bras de commutation (B_{A}) et le deuxième bras de commutation (B_{C}) du chargeur de batterie sont des bras de commutation de l'onduleur.

7. Installation électrique (100) selon la revendication 5 ou 6, dans laquelle la première inductance (L_{A}) et la deuxième inductance (L_{C}) du chargeur de batterie comportent chacune au moins une partie de respectivement le premier enroulement (104) et le deuxième enroulement (106) du moteur électrique.

8. Installation électrique (100) selon l'une quelconque des revendications 5 à 7, avec un chargeur de batterie selon la revendication 3 ou 4, dans laquelle le troisième bras de commutation (B_{E}) du chargeur de batterie est un bras de commutation de l'onduleur.

9. Installation électrique (100) selon l'une quelconque des revendications 5 à 8, avec un chargeur de batterie selon la revendication 3 ou 4, dans laquelle la troisième inductance (L_{E}) du chargeur de batterie comporte au moins une partie du troisième enroulement (108) du moteur électrique.

10. Véhicule automobile comportant une installation électrique (100) selon l'une quelconque des revendications 5 à 9, le moteur électrique étant destiné à entraîner des roues du véhicule automobile.

## Patentansprüche

1. Batterieladegerät, aufweisend:
- zwei Ausgangsklemmen (BS1, BS2), zwischen denen eine Batterie (102) bestimmt ist, angeschlossen zu sein, um einen Ladestrom (i_{B}) zu empfangen,
- zwei Eingangsklemmen (BE1, BE2), die bestimmt sind, an ein Stromnetz (110) angeschlossen zu sein, damit an sie eine Sinus-Netzspannung (u_{R}) angelegt wird,
- zwei Induktoren (L_{A}, L_{C}), die erste Enden aufweisen, die jeweils an die erste Eingangsklemme (BE1) und an die zweite Eingangsklemme (BE2) angeschlossen sind,
- zwei Umschaltarme (B_{A}, B_{C}), die bestimmt sind, jeweils zweite Enden der Induktoren (L_{A}, L_{C}) selektiv an die erste Ausgangsklemme (BS1) und an die zweite Ausgangsklemme (BS2) anzuschließen,
- eine Steuervorrichtung (120), die bestimmt ist, die Umschaltarme (B_{A}, B_{C}) derart zu steuern, dass aus dem Stromnetz (110) ein Netzstrom (i_{R}) entnommen wird, der mit der Netzspannung (u_{R}) in Phase ist,
**dadurch gekennzeichnet, dass** es ferner aufweist:
- eine Glättungskapazität (C), die ein erstes Ende aufweist, das an die zweite Ausgangsklemme (BS2) angeschlossen ist,
- eine Anschlussvorrichtung (112), die bestimmt ist, ein zweites Ende der Glättungskapazität (C) an die zweite Eingangsklemme (BE2) anzuschließen,
und dass, wenn das zweite Ende der Glättungskapazität (C) an die zweite Eingangsklemme (BE2) angeschlossen ist, die Steuervorrichtung (120) ferner bestimmt ist, mindestens den zweiten Umschaltarm (B_{C}) derart zu steuern, dass die Glättungskapazität (C) abwechselnd geladen und entladen wird, um den Ladestrom (i_{B}) zu glätten.

2. Batterieladegerät nach Anspruch 1, aufweisend ferner:
- eine Messvorrichtung (118) der Batteriespannung (E),
wobei die Anschlussvorrichtung (112) bestimmt ist, mindestens zwei Zustände einzunehmen, wobei das zweite Ende der Glättungskapazität (C) in einem der zwei Zustände, aber nicht in dem anderen, an die zweite Eingangsklemme (BE2) angeschlossen ist und wobei die Steuervorrichtung (120) bestimmt ist, die Anschlussvorrichtung (112) in Abhängigkeit von der gemessenen Batteriespannung (E) zu steuern, damit die Anschlussvorrichtung (112) von einem Zustand in den anderen wechselt.

3. Batterieladegerät nach Anspruch 1 oder 2, aufweisend ferner:
- einen dritten Induktor (L_{E}),
- einen dritten Umschaltarm (B_{E}), der bestimmt ist, ein erstes Ende des dritten Induktors (L_{E}) selektiv an die erste Ausgangsklemme (BS1) und an die zweite Ausgangsklemme (BS2) anzuschließen,
wobei die Anschlussvorrichtung (112) einen Umschalter umfasst, der bestimmt ist, das zweite Ende der Glättungskapazität (C) selektiv an die zweite Eingangsklemme (BE2) und an ein zweites Ende des dritten Induktors (L_{E}) anzuschließen,
und wobei, wenn das zweite Ende der Glättungskapazität (C) an das zweite Ende des dritten Induktors (L_{E}) angeschlossen ist, die Steuervorrichtung (120) bestimmt ist, den dritten Umschaltarm (B_{E}) derart zu steuern, dass die Glättungskapazität (C) abwechselnd geladen und entladen wird, um den Ladestrom (i_{B}) zu glätten.

4. Batterieladegerät nach Anspruch 3, wobei die Steuervorrichtung (120) bestimmt ist, den Umschalter zu steuern, um das zweite Ende der Glättungskapazität (C) an die zweite Eingangsklemme (BE2) anzuschließen, wenn die Batteriespannung (E) höher als ein Grenzwert ist, und den Umschalter zu steuern, um das zweite Ende der Glättungskapazität (C) an das zweite Ende des dritten Induktors (L_{E}) anzuschließen, wenn die Batteriespannung (E) niedriger als der Grenzwert ist.

5. Elektrische Anlage (100), aufweisend:
- ein Batterieladegerät nach einem der Ansprüche 1 bis 4,
- eine Batterie (102), die an die Ausgangsklemmen (BS1, BS2) des Batterieladegeräts angeschlossen ist,
- einen Elektromotor, der drei Wicklungen (104, 106, 108) aufweist,
- einen Wechselrichter, der die Batterie (102) an den Elektromotor anschließt, wobei der Wechselrichter sechs Umschaltarme (B_{A}...B_{F}) aufweist, die bestimmt sind, jeweils die sechs Enden der Wicklungen (104, 106, 108) selektiv an die erste Ausgangsklemme (BS1) und an die zweite Ausgangsklemme (BS2) anzuschließen.

6. Elektrische Anlage (100) nach Anspruch 5, wobei der erste Umschaltarm (B_{A}) und der zweite Umschaltarm (B_{C}) des Batterieladegeräts Umschaltarme des Wechselrichters sind.

7. Elektrische Anlage (100) nach Anspruch 5 oder 6, wobei der erste Induktor (L_{A}) und der zweite Induktor (L_{C}) des Batterieladegeräts jeweils mindestens einen Teil von jeweils der ersten Wicklung (104) und der zweiten Wicklung (106) des Elektromotors aufweisen.

8. Elektrische Anlage (100) nach einem der Ansprüche 5 bis 7 mit einem Batterieladegerät nach Anspruch 3 oder 4, wobei der dritte Umschaltarm (B_{E}) des Batterieladegeräts ein Umschaltarm des Wechselrichters ist.

9. Elektrische Anlage (100) nach einem der Ansprüche 5 bis 8 mit einem Batterieladegerät nach Anspruch 3 oder 4, wobei der dritte Induktor (L_{E}) des Batterieladegeräts mindestens einen Teil der dritten Wicklung (108) des Elektromotors aufweist.

10. Kraftfahrzeug, aufweisend eine elektrische Anlage (100) nach einem der Ansprüche 5 bis 9, wobei der Elektromotor bestimmt ist, Räder des Kraftfahrzeugs anzutreiben.

## Claims

1. A battery charger, comprising:
- two output terminals (BS1, BS2) between which a battery (102) is configured to be connected for receiving a load current (i_{B});
- two input terminals (BE1, BE2) designed to be connected to an electrical network (110) to be supplied with a sinusoidal mains voltage (u_{R});
- two inductors (L_{A}, L_{C}) having first ends respectively connected to the first input terminal (BE1) and to the second input terminal (BE2);
- two switching arms (B_{A}, B_{C}) designed for respectively connecting second ends of the inductors (L_{A}, L_{C}) selectively to the first output terminal (BS1) and to the second output terminal (BS2);
- a control device (120) designed for controlling the switching arms (B_{A}, B_{C}) so as to draw from the electrical network (110) a mains current (i_{R}) in phase with the mains voltage (u_{R});
**characterized in that** it further comprises:
- a smoothing capacitor (C) having a first end connected to the second output terminal (BS2),
- a connection device (112) for connecting a second end of the smoothing capacitor (C) to the second input terminal (BE2),
and **in that**, when the second end of the smoothing capacitor (C) is connected to the second input terminal (BE2), the control device (120) is further designed to control at least the second switching arm (B_{C}) so as to alternately charge and discharge the smoothing capacitor (C) for smoothing the load current (i_{B}).

2. The battery charger according to claim 1, further comprising:
- a measuring device (118) for measuring the battery voltage (E),
wherein the connection device (112) is designed to take at least two states, the second end of the smoothing capacitor (C) being connected to the second input terminal (BE2) in one of the two states, but not in the other, and wherein the control device (120) is designed to control the connection device (112) according to the measured battery voltage (E) for switching the connection device (112) from one state to the other.

3. The battery charger according to claim 1 or 2, further comprising:
- a third inductor (L_{E}),
- a third switching arm (B_{E}) for connecting a first end of the third inductor (L_{E}) selectively to the first output terminal (BS1) and to the second output terminal (BS2),
wherein the connection device (112) comprises a switch for connecting the second end of the smoothing capacitor (C) selectively to the second input terminal (BE2) and to a second end of the third inductance (L_{E}),
and wherein, when the second end of the smoothing capacitor (C) is connected to the second end of the third inductance (L_{E}), the control device (120) controls the third switching arm (B_{E}) so as to alternately charge and discharge the smoothing capacitor (C) for smoothing the load current (i_{B}).

4. The battery charger according to claim 3, wherein the control device (120) is for controlling the switch to connect the second end of the smoothing capacitor (C) to the second input terminal (BE2) when the battery voltage (E) is greater than a threshold, and for controlling the switch to connect the second end of the smoothing capacitor (C) to the second end of the third inductor (L_{E}) when the battery voltage (E) is below the threshold.

5. An electrical system (100) comprising:
- a battery charger according to claim 1 to 4,
- a battery (102) connected to the output terminals (BS1, BS2) of the battery charger,
- an electric motor having three windings (104, 106, 108),
- an inverter connecting the battery (102) to the electric motor, the inverter having six switching arms (B_{A}...B_{F}) for respectively connecting the six winding ends (104, 106, 108) selectively to the first output terminal (BS1) and to the second output terminal (BS2).

6. The electrical system (100) according to claim 5, wherein the first switching arm (B_{A}) and the second switching arm (B_{C}) of the battery charger are the switching arms of the inverter.

7. The electrical system (100) according to claim 5 or 6, wherein the first inductor (L_{A}) and the second inductor (Lc) of the battery charger each comprise at least a portion of respectively the first winding (104) and the second winding (106) of the electric motor.

8. The electrical system (100) according to any one of claims 5 to 7, with a battery charger according to claim 3 or 4, wherein the third switching arm (B_{E}) of the battery charger is a switching arm of the inverter.

9. The electrical system (100) according to any one of claims 5 to 8, with a battery charger according to claim 3 to 4, wherein the third inductor (L_{E}) of the battery charger comprises at least a portion of the third winding (108) of the electrical motor.

10. A motor vehicle comprising an electrical system (100) according to any one of claims 5 to 9, the electric motor being designed to drive the wheels of the motor vehicle.
